# FASCICULE DE BREVET EUROPEEN

(11) **EP 3 245 880 B1**
(45) Date de publication et mention de la délivrance du brevet: **19.06.2019**
(21) Numéro de dépôt: 17168022.6
(22) Date de dépôt: 25.04.2017
(51) Int. Cl.: A23L 3/3418, B65D 85/76, A23C 19/068

(54) **FROMAGE EMBALLE**
VERPACKTE KÄSE
PACKAGED CHEESE

(30) Priorité: 17.05.2016 FR 1654383
(43) Date de publication de la demande: 22.11.2017
(73) Titulaire: SAVENCIA SA, 78220 Viroflay (FR)
(72) Inventeur: GOUTAGNEUX, Jean, 43210 Bas en Basset (FR); PAIRE, Guillaume, 49800 TRELAZE (FR); BELTRAMO, Charlotte, 71960 LA ROCHE VINEUSE (FR); BEAUDON, Didier, 78120 RAMBOUILLET (FR)
(74) Mandataire: Gevers & Orès

(56) Documents cités:
- EP-A1- 1 847 480
- WO-A1-2014/175891
- US-A1- 2002 034 622
- US-A1- 2007 031 546
- US-A1- 2014 311 098
- STEHLE: "conditionnement des fromages a pates molles", TECHNIQUE LAITIERE, PARIS, FR, vol. 999, 1 juin 1985 (1985-06-01), pages 25-29, XP002124161, ISSN: 0040-1242

## Description

L'invention concerne un article alimentaire comprenant au moins un fromage et un emballage, fermé, enveloppant ledit fromage.

Il est connu de prévoir des emballages alimentaires destinés à envelopper des portions de fromage afin d'assurer leur protection vis-à-vis d'agressions extérieures.

Il a aussi été divulgué des emballages prévus en un matériau particulier pour former une atmosphère contrôlée à l'intérieur des emballages. L'objectif de tels emballages réside, par exemple, dans le contrôle du développement de microorganismes sur une surface tranchée d'une portion de fromage.

Il existe, cependant, des fromages encore difficile à emballer, en particulier car ils présentent des caractéristiques intrinsèques, notamment en terme de respiration, qu'il n'est pas aisé de contrôler.

Il est connu du document US 2014/311098 de modifier l'atmosphère à l'intérieur de l'emballage pour pouvoir contrôler la respiration.

Un des objectifs de la présente invention consiste à proposer un article alimentaire comprenant un fromage de la famille des bleus et un emballage associé permettant le contrôle d'au moins une des caractéristiques intrinsèques de ce fromage, sans modifier l'atmosphère à l'intérieur de l'emballage par ajout de gaz ou encore, par mise sous vide.

Ainsi l'invention concerne un article alimentaire comprenant au moins un fromage et un emballage, fermé, enveloppant ledit fromage, ledit fromage étant entier, non tranché, à pâte molle persillée et à croûte fleurie, ladite croûte fleurie recouvrant sensiblement tout le fromage, ledit emballage étant fermé hermétiquement.

Selon l'invention, ledit emballage présente au moins une paroi à perméabilité sélective à l'oxygène et/ou au dioxyde de carbone et/ou à la vapeur d'eau, de manière à contrôler la respiration dudit fromage, ladite paroi à perméabilité sélective présentant une épaisseur comprise entre 550µm et 1050µm.

L'emballage comprend un corps, dit réceptacle, et un film, dit opercule, le réceptacle et l'opercule étant scellés hermétiquement entre eux.

Ledit réceptacle est formé de parois à perméabilité sélective dont les épaisseurs sont comprises entre 550µm et 1050µm.

L'article alimentaire concerne un fromage à pâte molle persillée, autrement dit, un bleu. Ledit fromage est recouvert d'une croûte fleurie. Cela signifie que l'article alimentaire de l'invention concerne un fromage bleu à croûte fleurie, ou croûte blanche. Le fromage bleu est connu pour avoir des besoins spécifiques en terme de respiration, besoins qui sont différents de ceux de la croûte blanche.

Ici, l'article alimentaire présente l'avantage de proposer un emballage pour ce fromage particulier qui présente une partie bleu et une autre partie blanche. L'emballage selon l'invention est avantageusement prévu avec une paroi à perméabilité sélective qui présente une épaisseur donnée, comprise entre 550µm et 1050µm, car il a été constaté des résultats particulièrement avantageux en terme de respiration de ce fromage avec ce type de paroi.

Ainsi, la présente invention propose effectivement un article alimentaire comprenant un fromage de la famille des bleus, associé à un emballage qui présente au moins une paroi à perméabilité sélective, ayant une épaisseur donnée, permettant un contrôle d'au moins une des caractéristiques intrinsèques du fromage : sa respiration.

Selon différents modes de réalisation de l'invention, qui pourront être pris ensemble ou séparément :
- ledit fromage se présente sous une forme cylindrique,
- le réceptacle et l'opercule sont scellés entre eux, à chaud,
- le scellage entre le réceptacle et l'opercule est un scellage thermique,
- ledit réceptacle est en matière plastique,
- ledit réceptacle est en polystyrène,
- ledit réceptacle est en polyéthylène,
- ledit réceptacle est en polyéthylène téréphtalate,
- ledit réceptacle est formé de parois à perméabilité sélective dont les épaisseurs sont de l'ordre de 800µm,
- ledit réceptacle est obtenu par thermoformage,
- le taux de transmission d'oxygène du film plastique destiné audit réceptacle, avant thermoformage, est compris entre 100 et 150cm³ d'oxygène/[m².j.atm], mesure réalisée à 23°C et à 0% d'humidité relative,
- le taux de transmission d'oxygène des parois dudit réceptacle, après thermoformage, est de l'ordre de 3cm³ d'oxygène/[réceptacle.j.air], mesure réalisée à 23°C et à 0% d'humidité relative,
- ledit opercule est formé d'une paroi à perméabilité sélective,
- ledit opercule est formé d'une paroi à perméabilité sélective dépourvue de micro-perforation,
- ledit opercule est en matière plastique,
- ledit opercule est en polyéthylène,
- ledit opercule est en polyéthylène téréphtalate,
- ledit opercule est obtenu par découpe d'un film plastique,
- le taux de transmission d'oxygène du film plastique destiné audit opercule, avant découpe, est inférieur à 40cm³ d'oxygène/[m².j.atm], mesure réalisée à 23°C et à 0% d'humidité relative,
- le taux de transmission d'oxygène de l'opercule, après découpe, est de l'ordre de 0,05cm³ d'oxygène/[opercule.j.air], mesure réalisée à 23°C, à 0% d'humidité relative, pour une surface d'opercule de l'ordre de 78,5cm²,
- l'article alimentaire de l'invention comprend, en outre, une boîte en carton destinée à envelopper ledit réceptacle,
- l'assemblage du réceptacle et de la boîte est un assemblage par coopération de formes et/ou par collage et/ou emmanchage à force,
- le désassemblage du réceptacle et de la boîte est possible sans prévoir d'outil spécifique,
- l'article alimentaire de l'invention comprend, en outre, une pièce de base en carton destinée à couvrir ledit opercule,
- ladite pièce de base en carton est conçue de manière à protéger l'opercule d'éventuelles agressions extérieures audit article alimentaire,
- la teneur volumique en oxygène, à l'intérieur dudit emballage, est inférieure à 1%,
- la teneur volumique en oxygène, à l'intérieur dudit emballage, est comprise entre 0 et 1 %,
- la teneur volumique en oxygène, à l'intérieur dudit emballage, est comprise entre 0,001% et 1%,
- la teneur volumique en dioxyde de carbone, à l'intérieur dudit emballage, est comprise entre 4% et 13%.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence au dessin schématique annexé :

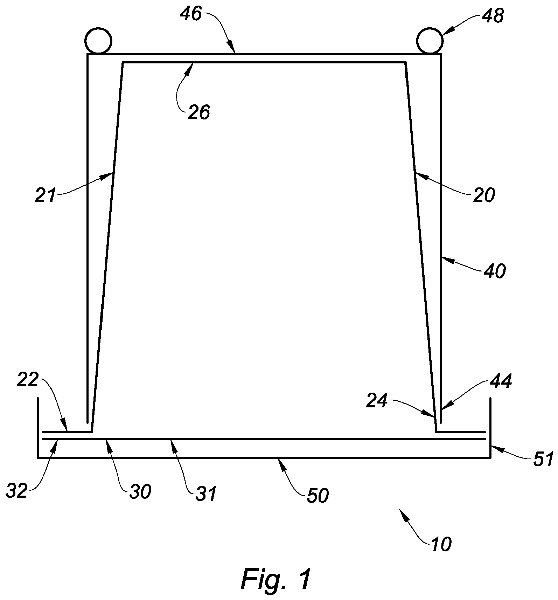

- la figure 1 est une illustration schématique d'un exemple de réalisation d'un emballage de l'article alimentaire selon l'invention.

Comme illustré sur la figure 1, l'invention concerne un article alimentaire comprenant au moins un fromage et un emballage 10, fermé, enveloppant ledit fromage, ledit fromage étant entier, non tranché, à pâte molle persillée et à croûte fleurie.

On entend par « emballage, fermé, enveloppant ledit fromage », un emballage rigide, de préférence non plaqué au fromage. Autrement dit, l'emballage 10 est différent d'un film plaqué au fromage. Encore autrement dit, l'emballage 10 n'est pas déformable plastiquement sous une action de préhension normale entre les doigts d'un utilisateur.

Par « fromage entier, non tranché », on entend un fromage plein. Autrement dit, un fromage qui ne se présente pas sous la forme d'une portion. Encore autrement dit, ce fromage ne résulte pas d'une découpe provenant d'un fromage entier.

Par « fromage à pâte molle persillée et à croûte fleurie », on entend un fromage obtenu de la manière suivante : un ensemencement en *Penicillium roquefortii* associé à une étape de piquage mécanique de la caillebotte pour le développement du persillage dans la pâte puis une pulvérisation de la caillebotte avec des microorganismes des espèces *Penicillium candidum* et/ou *Geotrichum candidum* qui donne une croûte fleurie pendant l'affinage en hâloirs; croûte ivoire à beige dans la microcave, appelée aussi, ici, croûte blanche.

Ladite croûte fleurie, ou croûte blanche, recouvre sensiblement tout le fromage. De préférence, la croûte blanche recouvre tout le fromage.

A titre exceptionnel, des parties discrètes du fromage peuvent ne pas être recouvertes.

Ledit fromage se présentera avantageusement sous une forme cylindrique, à bords éventuellement arrondis, sans que cette forme ne soit exclusive.

Selon l'invention, ledit emballage 10 présente au moins une paroi 21, 26, 31 à perméabilité sélective à l'oxygène et/ou au dioxyde de carbone et/ou à la vapeur d'eau, de manière à contrôler la respiration dudit fromage, ladite paroi 21, 26, 31 à perméabilité sélective présentant une épaisseur comprise entre 550µm et 1050µm.

Autrement dit, ladite au moins une paroi 21, 26, 31 à perméabilité sélective permettra des échanges gazeux entre l'intérieur et l'extérieur de l'emballage 10. Encore autrement dit, l'atmosphère à l'intérieur de l'emballage 10 sera avantageusement modifiée par l'activité microbienne du fromage, dans l'emballage rigide, non plaqué au fromage. Ainsi, il n'est pas prévu de modifier l'atmosphère à l'intérieur de l'emballage 10 par ajout de gaz ou encore, par mise sous vide.

L'emballage 10 comprendra un corps, dit réceptacle 20, et un film, dit opercule 30, le réceptacle 20 et l'opercule 30 étant scellés hermétiquement entre eux, de préférence à chaud, par un scellage thermique.

Ce scellage pourra aussi être un scellage par ultra-sons, voire un scellage par induction, ou encore toutes autres technologies permettant l'obtention d'une fermeture étanche entre le réceptacle 20 et l'opercule 30.

Ainsi, l'emballage 10 est fermé hermétiquement.

Cela signifie que les échanges gazeux entre l'intérieur et l'extérieur de l'emballage 10 ne se font pas via la/les zones de scellage thermique. Ce scellage, repéré sur la figure 1 par les références 22 et 32. Il se présentera, de préférence, sous la forme d'un cordon 22, 32.

Comme évoqué ci-dessus, tout autre assemblage mécanique entre le réceptacle 20 et l'opercule 30 permettant de réaliser une étanchéité totale à ce niveau pourra être envisagé, ceci sans sortir du cadre de l'invention, par exemple un cordon 22, 32 de colle.

Le réceptacle 20 est prévu en matière plastique, avantageusement obtenu par thermoformage. Il pourra être prévu en polystyrène, en polyéthylène, en polyéthylène téréphtalate, ou en tout autre matière plastique permettant de réaliser des parois à perméabilité sélective, notamment pour des échanges gazeux entre l'intérieur et l'extérieur de l'emballage 10.

L'opercule 30 sera avantageusement obtenu par une découpe de matière plastique, notamment une découpe d'un film plastique. Le film plastique utilisé pour l'opercule 30 sera avantageusement obtenu par extrusion.

Le réceptacle présentera avantageusement une paroi de fond 26 et une/des parois latérales 21.

Avantageusement, la perméabilité sélective des parois 21, 26, 31 évoquées ci-dessus ne sera pas obtenue à l'aide de micro-perforations.

En variante, la perméabilité sélective de la paroi 31 formant l'opercule 30 pourra être micro-perforée, ceci sans sortir du cadre de l'invention.

Avantageusement le réceptacle 20 sera formé de parois 21, 26 dont les épaisseurs seront de l'ordre de 800µm.

A titre d'exemple, le taux de transmission d'oxygène du film plastique destiné à la réalisation des parois 21, 26 dudit réceptacle 20, avant thermoformage, sera compris entre 100 et 150cm³ d'oxygène/[m².j.atm]. A titre d'exemple, encore, après thermoformage, le taux de transmission d'oxygène des parois 21, 26 dudit réceptacle 20 sera de l'ordre de 3cm³ d'oxygène/[réceptacle.j.air]. A titre d'exemple, encore, le taux de transmission d'oxygène du film plastique destiné audit opercule 30, avant découpe, sera inférieur à 40cm³ d'oxygène/[m².j.atm] et, après découpe, de l'ordre de 0,05cm³ d'oxygène/[opercule.j.air], en particulier pour une surface d'opercule de l'ordre de 78,5cm².

Les mesures données ici sont réalisées à 23°C et à 0% d'humidité relative.

L'article alimentaire de l'invention pourra comprendre, en outre, une boîte en carton 40 destinée à envelopper ledit réceptacle 20. Autrement dit, la boîte 40 sera poreuse aux échanges gazeux.

D'autre part, ladite boîte 40 sera conçue de manière à entourer ledit réceptacle 20. La boîte 40 pourra présenter un/des bourrelets de tête 48, ledit/lesdits bourrelets de tête 48 ayant, par exemple, une fonction esthétique. Dans l'exemple illustré ici, la boîte 40 est avantageusement cylindrique, et le/les bourrelets de tête 48 se présentent sous la forme d'un unique bourrelet 48, venu de matière avec le reste de la boîte 40 en carton, ledit bourrelet 48 suivant le pourtour de la boîte 40, et faisant saillie de la boîte 40 à partir de sa paroi de fond 46. Ladite paroi de fond 46 sera avantageusement destinée à coopérer avec la paroi de fond 26 du réceptacle 20 afin d'assurer la mise en position de ladite boîte 40 relativement audit réceptacle 20.

La boîte 40 aura avantageusement une fonction esthétique. Autrement dit, ladite boîte 40 permettra d'habiller le réceptacle 20.

Le maintien en position du réceptacle 20 à l'intérieur de la boîte 40 se fera, avantageusement, par un assemblage par coopération de formes et/ou par collage et/ou emmanchage à force, en particulier entre les zones repérées 24 et 44 sur la figure 1.

Un désassemblage du réceptacle 20 et de la boîte 40 sera possible sans prévoir d'outil spécifique, par exemple par un effort anormalement élevé exercé par les mains d'un utilisateur. Cependant ce désassemblage ne nécessitera pas l'utilisation la manipulation d'un outil. Cela est particulièrement avantageux en terme de recyclage de l'emballage 10 de l'invention après consommation de l'intégralité du fromage faisant partie de l'article alimentaire objet de la présente description.

Ledit article alimentaire pourra comprendre, en outre, une pièce de base 50, aussi en carton, destinée à couvrir ledit opercule 30. Autrement dit, ladite pièce de base 50 sera poreuse aux échanges gazeux.

Ladite pièce de base 50 sera avantageusement conçue de manière à protéger ledit opercule 30 d'éventuelles agressions extérieures. Elle présentera un bord/des pattes périphériques assurant sa mise en position et son maintien en position avec le réceptacle 20. Ce bords/ces pattes périphériques, repérées 51 sur la figure 1, permettront un assemblage/désassemblage aisé entre ladite pièce de base 50 et le réceptacle 20. Ladite pièce de base 50 pourra aussi servir de support de présentation pour le fromage une fois celui-ci sorti du réceptacle 20.

Il est à noter que la teneur volumique en oxygène à l'intérieur dudit emballage 10, sera avantageusement inférieure à 1%. On entend par «teneur volumique en oxygène à l'intérieur dudit emballage », une teneur en oxygène dans l'atmosphère entre le fromage et les parois 21, 26, 51 de l'emballage 10, mesurée à l'intérieur dudit réceptacle 20. Plus précisément, cette teneur volumique en oxygène sera comprise entre 0 et 1%, et encore plus précisément, entre 0,001% et 1%.

D'autre part, la teneur volumique en dioxyde de carbone, à l'intérieur dudit emballage, sera avantageusement comprise entre 4% et 13%.

Ces teneurs, ou taux, sont mesurables à l'intérieur du réceptacle 20 par des méthodes traditionnelles. Ce sont des taux dynamiques. Cela signifie que les mesures effectuées à l'intérieur du réceptacle 20, que ce soit pour la teneur en oxygène ou en dioxyde de carbone, seront comprises dans les fourchettes de valeurs données, ceci quel que soit l'âge du fromage contenu dans l'emballage 10.

Il est à noter également que des variantes de réalisation sont bien sûr possibles. Notamment il est aussi envisageable, dans des exemples de réalisation supplémentaires, que le fromage soit préemballé dans un papier ne bloquant pas la respiration du fromage, ceci pour des raisons de praticité, voire pour raisons esthétiques (par exemple pour permettre l'impression d'informations sur la face externe dudit papier).

Il est envisageable, encore, que le réceptacle soit obtenu par injection plastique, directement à une épaisseur donnée et prédéfinie, les parois formant le réceptacle présentant une perméabilité sélective à l'oxygène et/ou au dioxyde de carbone et/ou à la vapeur d'eau, de manière à contrôler la respiration dudit fromage, en particulier de manière à assurer une teneur volumique en oxygène, à l'intérieur de l'emballage 10 de l'invention, inférieure à 1% et/ou une teneur volumique en dioxyde de carbone, à l'intérieur du même emballage 10, qui sera comprise entre 4% et 13%, ceci sans sortir du cadre de l'invention.

## Revendications

1. Article alimentaire comprenant au moins un fromage et un emballage (10), fermé, enveloppant ledit fromage, ledit fromage étant entier, non tranché, à pâte molle persillée et à croûte fleurie, ladite croûte fleurie recouvrant sensiblement tout le fromage, ledit emballage (10) étant fermé hermétiquement, **caractérisé en ce que** ledit emballage (10) présente au moins une paroi (21, 26, 31) à perméabilité sélective à l'oxygène et/ou au dioxyde de carbone et/ou à la vapeur d'eau, de manière à contrôler la respiration dudit fromage, ladite paroi (21, 26, 31) à perméabilité sélective présentant une épaisseur comprise entre 550µm et 1050µm, l'emballage (10) comprenant un corps, dit réceptacle (20), et un film, dit opercule (30), le réceptacle (20) et l'opercule (30) étant scellés hermétiquement entre eux, notamment à chaud, ledit réceptacle (20) étant formé de parois (21, 26) à perméabilité sélective dont les épaisseurs sont comprises entre 550µm et 1050µm.

2. Article alimentaire selon la revendication précédente, dans lequel ledit fromage se présente sous une forme cylindrique.

3. Article alimentaire selon l'une des revendications précédentes, dans lequel ledit réceptacle (20) est en matière plastique, notamment en polystyrène, en polyéthylène ou en polyéthylène téréphtalate.

4. Article alimentaire selon l'une quelconque des revendications précédentes, dans lequel ledit réceptacle (20) est formé de parois (21, 26) à perméabilité sélective dont les épaisseurs sont de l'ordre de 800µm.

5. Article alimentaire selon l'une quelconque des revendications précédentes, dans lequel ledit opercule (30) est formé d'une paroi (31) à perméabilité sélective, notamment dépourvue de micro-perforation.

6. Article alimentaire selon l'une quelconque des revendications précédentes, comprenant, en outre, une boîte (40) en carton destinée à envelopper ledit réceptacle (20).

7. Article alimentaire selon l'une quelconque des revendications précédentes, comprenant, en outre, une pièce de base (50) en carton destinée à couvrir ledit opercule (30), ladite pièce de base (50) en carton étant conçue de manière à protéger l'opercule (30) d'éventuelles agressions extérieures audit article alimentaire.

8. Article alimentaire selon l'une quelconque des revendications précédentes, dans lequel la teneur volumique en oxygène, à l'intérieur dudit emballage (10), est inférieure à 1%.

9. Article alimentaire selon l'une quelconque des revendications précédentes, dans lequel la teneur volumique en dioxyde de carbone, à l'intérieur dudit emballage (10), est comprise entre 4% et 13%.

## Patentansprüche

1. Lebensmittelartikel, der mindestens einen Käse und eine geschlossene, den Käse umhüllende Verpackung (10) umfasst, wobei der Käse ein ganzer, nicht geschnittener Weichkäse mit Blauschimmel und mit Schimmelrinde ist, wobei die Schimmelrinde im Wesentlichen den gesamten Käse bedeckt, wobei die Verpackung (10) hermetisch geschlossen ist, **dadurch gekennzeichnet, dass** die Verpackung (10) mindestens eine Wand (21, 26, 31) mit selektiver Sauerstoff- und/oder Kohlendioxid- und/oder Wasserdampfdurchlässigkeit aufweist, um die Atmung des Käses zu steuern, wobei die Wand (21, 26, 31) mit selektiver Durchlässigkeit eine Dicke im Bereich zwischen 550 µm und 1050 µm aufweist, wobei die Verpackung (10) einen als Gefäß (20) bezeichneten Körper und einen als Deckel (30) bezeichneten Film umfasst, wobei das Gefäß (20) und der Deckel (30) hermetisch miteinander versiegelt, insbesondere heißversiegelt sind, wobei das Gefäß (20) von Wänden (21, 26) mit selektiver Durchlässigkeit gebildet wird, deren Dicken im Bereich zwischen 550 µm und 1050 µm liegen.

2. Lebensmittelartikel nach dem vorstehenden Anspruch, wobei sich der Käse in einer zylindrischen Form präsentiert.

3. Lebensmittelartikel nach einem der vorstehenden Ansprüche, wobei das Gefäß (20) aus Kunststoff, insbesondere aus Polystyrol, aus Polyethylen oder aus Polyethylenterephthalat ist.

4. Lebensmittelartikel nach einem der vorstehenden Ansprüche, wobei das Gefäß (20) von Wänden (21, 26) mit selektiver Durchlässigkeit gebildet wird, deren Dicken in der Größenordnung von 800 µm liegen.

5. Lebensmittelartikel nach einem der vorstehenden Ansprüche, wobei der Deckel (30) von einer Wand (31) mit selektiver Durchlässigkeit gebildet wird, die insbesondere frei von Mikroperforationen ist.

6. Lebensmittelartikel nach einem der vorstehenden Ansprüche, weiter eine Schachtel (40) aus Pappe umfassend, die dazu bestimmt ist, das Gefäß (20) zu umhüllen.

7. Lebensmittelartikel nach einem der vorstehenden Ansprüche, weiter ein Basisteil (50) aus Pappe umfassend, das dazu bestimmt ist, den Deckel (30) abzudecken, wobei das Basisteil (50) aus Pappe so konzipiert ist, dass es den Deckel (30) vor eventuellen Angriffen des Lebensmittelartikel von außen schützt.

8. Lebensmittelartikel nach einem der vorstehenden Ansprüche, wobei der Sauerstoffvolumengehalt im Inneren der Verpackung (10) kleiner als 1 % ist.

9. Lebensmittelartikel nach einem der vorstehenden Ansprüche, wobei der Kohlendioxidvolumengehalt im Inneren der Verpackung (10) zwischen 4 % und 13 % liegt.

## Claims

1. Food article comprising at least one cheese and one packaging (10), closed, surrounding said cheese, said cheese being whole, not sliced, soft and blue and with a blooming crust, said blooming crust covering substantially all of the cheese, said packaging (10) being hermetically closed, **characterised in that** said packaging (10) has at least one wall (21, 26, 31) with selective oxygen and/or carbon dioxide and/or steam permeability, so as to control the respiration of said cheese, said wall (21, 26, 31) with selective permeability having a thickness of between 550µm and 1050µm, the packaging (10) comprising a body, referred to as receptacle (20), and a film, referred to as cover (30), the receptacle (20) and the cover (30) being hermetically sealed together, in particular hot-sealed, said receptacle (20) being formed of walls (21, 26) with selective permeability of which the thicknesses are of between 550µm and 1050µm.

2. Food article according to the preceding claim, wherein said cheese has a cylindrical shape.

3. Food article according to any one of the preceding claims, wherein said receptacle (20) is made of plastic material, in particular polystyrene, polyethylene or polyethylene terephthalate.

4. Food article according to any one of the preceding claims, wherein said receptacle (20) is formed of walls (21, 26) with selective permeability of which the thicknesses are of around 800µm.

5. Food article according to any one of the preceding claims, wherein said cover (30) is formed of a wall (31) with selective permeability, in particular devoid of micro-perforation.

6. Food article according to any one of the preceding claims, comprising, furthermore, a cardboard box (40) intended to surround said receptacle (20).

7. Food article according to any one of the preceding claims, comprising, furthermore, a base part (50) made of cardboard intended to cover said cover (30), said base part (50) made of cardboard being designed so as to protect the cover (30) from possible external damage to said food article.

8. Food article according to any one of the preceding claims, wherein the oxygen content by volume, inside said packaging (10), is less than 1%.

9. Food article according to any one of the preceding claims, wherein the carbon dioxide content in volume, inside said packaging (10), is between 4% and 13%.
